# EUROPEAN PATENT APPLICATION

(11) **EP 4 220 434 A1**
(43) Date of publication of application: **02.08.2023**
(21) Application number: 22181613.5
(22) Date of filing: 28.06.2022
(51) Int. Cl.: G06F 16/332

(54) **INTELLIGENT QUERY AUTO-COMPLETION SYSTEMS AND METHODS**

(30) Priority: 27.01.2022 US 202217649157
(71) Applicant: Intuit Inc., Mountain View, CA 94043 (US)
(72) Inventor: DANGOOR, Sheer, Mountain View, 94043 (US); ARIE, Aviv Ben, Mountain View, 94043 (US)
(74) Representative: D Young & Co LLP

(57) **Abstract**

Systems and methods are described for training a large language model with query auto-completion training data and automatically generating query auto-completion training data in an interactive GUI. A computing system continuously trains and refines a large language model utilizing masking techniques to on complex software-related queries. The computing system is further configured to utilize the large language model to provide complex software-related query suggestions to users operating a graphical user interface real-time.

## Description

### BACKGROUND

Conventional systems for language sequence completion of complex software-related queries are limited to recommending terms from pre-loaded fixed libraries of known methods and variables. Such recommendations are merely mechanisms for saving time while typing. In addition, in a closely related field, existing systems for language sequence completion of human generated free text sentences merely recommends the next probable word or letter in a word.

In addition, conventional language autocompletion techniques were utilized to enhance and speed up user interaction within a text processing environment. For example, conventional systems provide techniques for completing a single term within a code editor or the next probable word in a word processor. However, generating such textual recommendations involves sorting through fixed libraries of known phrases or providing linear recommendations for the next word in a human free text sequence. In these examples, while existing systems may provide textual recommendations, such textual completion techniques fail to consider the context of the language being created and would be inadequate for environments that involve completing sequences of complex queries for structured programming languages.

### BRIEF DESCRIPTION OF THE FIGURES

FIG. 1 illustrates a computing environment, according to various embodiments of the present disclosure.
FIG. 2 illustrates a method for training a large language model with query autocompletion training data, according to various embodiments of the present disclosure.
FIG. 3 illustrates a method for providing query auto-completion suggestions, according to various embodiments of the present disclosure.
FIG. 4 illustrates a graphical user interface for displaying query auto-completion suggestions, according to example embodiments of the present disclosure.
FIG. 5 illustrates a block diagram for a computing device, according to various embodiments of the present disclosure.

### DETAILED DESCRIPTION OF SEVERAL EMBODIMENTS

Embodiments of the present disclosure relate to systems and methods for training a large language machine learning model using masking techniques on software-related queries and auto-completing complex software-related queries in an interactive graphical user interface (GUI). The implementation of these novel concepts may include, in one respect, training a large language model on new and previously stored software-related queries (e.g., SQL code) that have had aliases (e.g., temporary naming conventions) removed or normalized from the query. In furtherance of training the large language model, masking techniques (and various other natural language processing techniques) may be used, which involves feeding one or more queries into the model, hiding a percentage of the syntax elements within the query, and having the model predict what the hidden syntax elements are. Such techniques train the large language model to continuously refine its understanding of the context of the query. The large language model then calculates the loss of the predictions and fine tunes the model further based on the calculated loss. In another aspect, the system leverages the large language model, and the aggregated query data related to an organization, to asynchronously and automatically complete complex software-related queries as they are being generated via an interactive GUI in real-time. This auto-completion process may enable users to receive relevant real-time suggestions for completing the business logic in complex software-related queries.

The instant system and methods provide novel techniques for overcoming the deficiencies of conventional systems by enabling asynchronous, real-time, autocompletion of software-related (e.g., SQL) queries in an interactive graphical user interface by leveraging large language model implementing masking techniques. The instant systems and methods may leverage dynamic graphical user interfaces, advanced security protocols, and large language model deep learning techniques in order to provide autocompletion suggestions. In some examples, the large language model autocompletion engine may be used to automate some of the processes. In addition, the large language model may be used to enhance security, customize and configure one or more software or hardware components, and/or predict user activity (e.g., queries) based on training data refined on data gathered from user activity associated with similarly situated users. One having ordinary skill in the art will recognize that instant software-related queries (i.e., code) may be capable of creating additional software applications/modules and/or modify computer hardware, and consequently are more sophisticated, therefore the instant autocompletion suggestions are related to human generated free text.

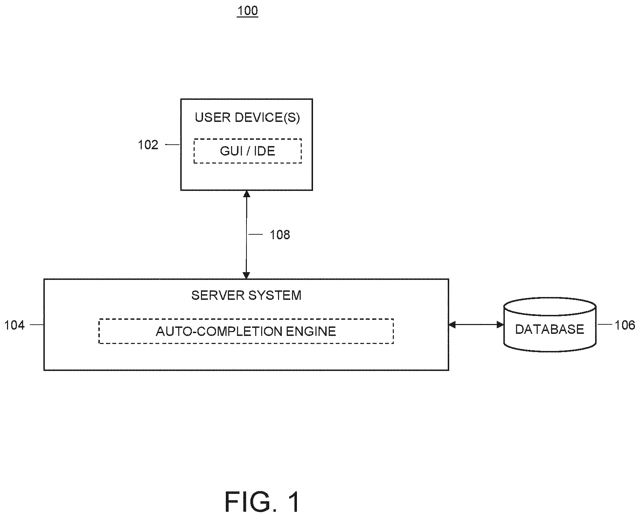

Referring to FIG. 1, computing environment 100 may be configured to train a large language model with query auto-completion training data and asynchronously provide query auto-completion suggestions via an interactive GUI, according to embodiments of the present disclosure. Computing environment 100 may include one or more user device(s) 102, a server system 104, and a database106 communicatively coupled to the server system 104. The user device(s) 102, server system 104, and database 106 may be configured to communicate through network 108.

In one or more embodiments, user device(s) 102 is operated by a user. User device(s) 102 may be representative of a mobile device, a tablet, a desktop computer, or any computing system having the capabilities described herein. Users may include, but are not limited to, individuals such as, for example, software engineers, database administrators, subscribers, employees, clients, prospective clients, or customers of an entity associated with server system 104, such as individuals who have obtained, will obtain, or may obtain a product, service, or consultation from an entity associated with server system 104.

User device(s) 102 according to the present disclosure may include, without limit, any combination of mobile phones, smart phones, tablet computers, laptop computers, desktop computers, server computers or any other computing device configured to capture, receive, store and/or disseminate any suitable data. In one embodiment, a user device(s) 102 may include a memory, one or more processors including machine readable instructions, a communications interface which may be used to communicate with the server system (and, in some examples, with the database 106), a user input interface for inputting data and/or information to the user device and/or a user display interface for presenting data and/or information on the user device. In some examples, the user input interface and the user display interface may be configured as an interactive GUI and/or an integrated development environment (IDE). The user device(s) 102 may also be configured to provide the server system 104, via the interactive GUI, input information (e.g., queries) for further processing. In some examples, the interactive GUI may be hosted by the server system 104 or it may be provided via a client application operating on the user device. In some embodiments, a user operating the user device(s) 102 may be modifying one or more software modules or tables stored on database 106.

Server system 104 may host, store, and operate an auto-completion engine for generating query auto-completion training data and for providing query auto-completion suggestions. The auto-completion engine may enable asynchronous monitoring of complex queries inputted via an interactive GUI capable of receiving queries (e.g., database SQL queries) in real-time, and simultaneously from one or more users. The server system 104 may receive a complex query from one or more user device(s) 102 and, in response to receiving the one or more complex queries, remove or normalize alias found in the one or more queries. The server system 104 may then automatically store the complex query in a database along with a set of previously stored complex queries as aggregated query data. The server system 104 may train a large language model on the aggregated query data using masking techniques by masking one or more query syntax elements of each complex query in the aggregated query data, predicting, via the large language model, the masked one or more syntax elements of each query, and calculating loss based on the predictions of the masked one or more syntax elements of each query. The server system 104 may retrain the large language model based on the calculated loss. The server system 104 may include security components capable of monitoring user rights and privileges associated with generating queries, accessing the server system 104, and modifying tables in the database 106. Accordingly, the server system 104 may be configured to manage user rights, manage access permissions for tables, object permissions, and the like. The server system 104 may be further configured to implement twofactor authentication, Secure Sockets Layer (SSL) protocols for encrypted communication sessions, biometric authentication, and token-based authentication. The server system 104 may include one or more processors, servers, databases, communication/traffic routers, memory, modules, and interface components.

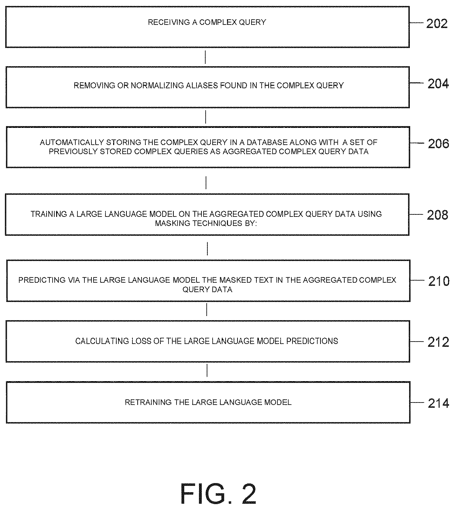

Database 106 may be locally managed or a cloud-based collection of organized data stored across one or more storage devices (e.g., databases). The database 106 may be complex and developed using one or more design schema and modeling techniques. The database system may be hosted at one or more data centers operated by a cloud computing service provider. The database 106 be geographically proximal to or remote from the server system 104 configured for data dictionary management, data storage management, multi-user access control, data integrity, backup and recovery management, database access language application programming interface (API) management, and the like. The database 106 may be in communication with the server system 104 and the user device via network 108. The database 106 may store various data, including one or more tables, that can be modified via queries initiated by users operating user device(s) 102. Various data in the database 106 may be refined over time using a large language model, for example the large language model discussed infra in FIGS. 2, 3, and 5. Additionally, the database system may be deployed and maintained automatically by one or more components shown in FIG. 1.

Network 108 may be of any suitable type, including individual connections via the Internet, such as cellular or Wi-Fi networks. In some embodiments, network 108 may connect terminals, services, and mobile devices using direct connections, such as radio frequency identification (RFID), near-field communication (NFC), Bluetooth^{™}, low-energy Bluetooth^{™} (BLE), Wi-Fi^{™}, ZigBee^{™}, ambient backscatter communication (ABC) protocols, USB, WAN, LAN, or the Internet. Because the information transmitted may be personal or confidential, security concerns may dictate one or more of these types of connection be encrypted or otherwise secured. In some embodiments, however, the information being transmitted may be less personal, and therefore, the network connections may be selected for convenience over security.

For example, network 108 may be the Internet, a private data network, virtual private network using a public network and/or other suitable connection(s) that enables components in computing environment 100 to send and receive information between the components of computing environment 100.

In some embodiments, communication between the elements may be facilitated by one or more application programming interfaces (APIs). APIs of server system 104 may be proprietary and/or may be examples available to those of ordinary skill in the art such as Amazon^{®} Web Services (AWS) APIs or the like.

Referring to FIG. 2, a method for training a large language model with query autocompletion training data is depicted, according to various embodiments of the present disclosure. At 202, server system 104 may receive a complex query from a user device operating an interactive GUI where the complex query originates from. For example, a user operating user device(s) 102 may generate a query to modify a database via an interactive GUI, wherein the query is subsequently received by server system 104.

At 204, server system 104 may then remove or normalize aliases found in the complex query. For example, the server system 104 may parse the complex to identify aliases (e.g., a temporary name assigned to an object to reduce the amount of code required for a complex query and to make the complex query simpler to comprehend). Once the aliases, if any, have been identified, the server system 104 may remove the aliases or normalize the aliases by substituting the original alias for a predetermined standardized proxy consistently used in training data.

Server system 104 may then automatically store the complex query in database 106 along with a set of previously stored complex queries, as aggregated complex query data, as depicted in 206. Here, once aliases have been removed from the complex query, the server system 104 may store the complex query in a database (e.g., a database comprising at least training data) along with previously stored complex queries.

At 208, the server system may train a large language model on the aggregated data using masking techniques. For example, the server system 104 may train an algorithm that can recognize, predict, and generate complex programming language syntax to improve its process for recognition, prediction, and language generation through various training techniques. One technique the server system 104 may implement is tokenizing the complex query, thereby reducing the complex query into smaller segments, which aids the large language system in interpreting the context of the complex query. One technique server system 104 may implement is a masking technique, wherein one or more complex query syntax elements are masked (i.e., hidden) from the large language model, thereby providing the large language model with incomplete query, and subsequently asking the large language model to accurately generate a complete query by predicting the masked complex query syntax elements.

Accordingly, training may include predicting, via the large language model, masked text in the aggregated complex query data, as depicted at 210. For example, the large language model may receive a complex query (or one or more complex queries simultaneously) with masked complex query syntax elements as input and attempt to predict the masked complex query syntax elements by bidirectionally analyzing the complex query and the non-masked complex query syntax elements for context. The large language model can interpret context by applying attention weights to the non-masked complex query syntax elements adjacent to the masked complex query syntax elements, which influences the prediction process by applying a weight to every non-masked complex query syntax element. Additionally, the large language model can analyze the complex query syntax elements in parallel, therefore allowing the large language model the ability to predict one or more masked complex query syntax elements simultaneously.

At 212, the server system 104 may calculate loss of the large language model predictions. For example, the server system 104 may evaluate how well the large language model predicted the masked input. The server system 104 may implement one or more loss functions in calculating the loss, such as, but not limited to, means squared error, likelihood loss, and log loss (cross entropy loss). At 214, the calculated loss is fed into the large language model to retrain the model.

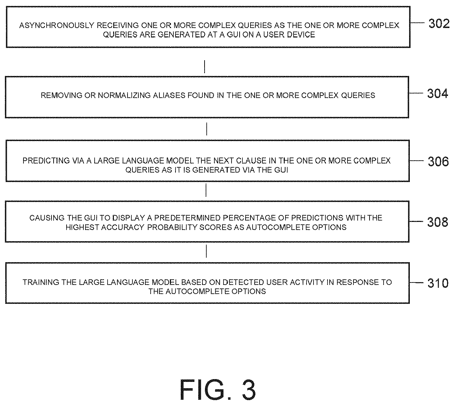

FIG. 3 illustrates a method for providing query auto-completion suggestions, according to various embodiments of the present disclosure. At 302 server system 104 may asynchronously receive one or more complex queries as the one or more complex queries are being generated via an interactive GUI on one or more user devices. For example, a user operating user device(s) 102 may generate a query to modify a database via an interactive GUI, wherein the query is subsequently received by server system 104.

At 304 server system 104 may remove or normalize aliases found in the one or more complex queries. For example, as discussed in FIG. 2, server system 104 may parse the complex to identify aliases (e.g., a temporary name assigned to an object to reduce the amount of code required for a complex query and to make the complex query simpler to comprehend). Once the aliases, if any, have been identified, the server system 104 may remove the aliases or normalize the aliases by substituting the original alias for a predetermined standardized proxy consistently used in training data.

At 306 server system 104 may predict, via a large language model, the next clause in the one or more complex queries as the one more complex queries are being generated via the interactive GUI. For example, as a user generates a complex query (e.g., a programming language statement such as a SQL query) the server system 104 may detect complex query syntax elements as they are being entered in the interactive GUI and based on prior training and unique data associated with the user's organization, server system 104 may predict the next one or more clauses that complete the complex query. The server system 104 may then assign an accuracy probability score to each prediction.

At 308 server system 104 may display a predetermined percentage of predictions with the highest accuracy probability scores as autocomplete options on the interactive GUI. Here, the server system 104 may determine which predictions have the highest accuracy probability scores and generate instructions to transmit a predetermined percentage of the predications with the highest accuracy probability scores to the user device(s) 102 to be dynamically populated at the interactive GUI as autocomplete options. In addition, the server system 104 may transmit predictions with accuracy probability scores that exceed a predetermined threshold.

At 310 server system 104 may train the large language model based on detected user activity in response to the predictions being displayed on the interactive GUI. For example, server system 104 may determine what type of action the user took (e.g., which autocomplete options (i.e., suggestion) the user selected or the lack of a user selection) and feed this information into the large language model for further training. Many of the steps recited as it relates to FIG. 3 are extensions of and coincide with one or more steps discussed as it relates to FIG. 2. Accordingly, the steps of FIG. 3 are not meant to necessarily be performed as a substitute of the steps performed in FIG. 2.

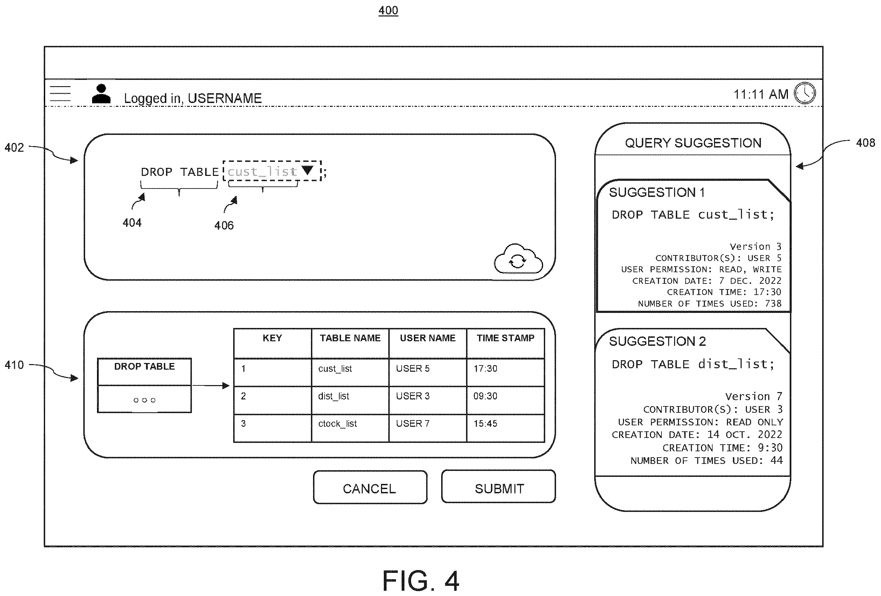

FIG. 4 illustrates a graphical user interface for displaying query auto-completion suggestions, according to example embodiments. In some instances, the interactive GUI 400 may be a stand-alone application or a sub-feature associated with an IDE. The interactive GUI 400 may be operated by one or more users using one or more user device(s) 102 simultaneously. In some embodiments interactive GUI 400 may initiate and play an integral role for processes associated with training a large language model with query auto-completion training data as discussed in FIG. 2 and/or a method for providing query auto-completion suggestions, as described in relation to FIG. 3. As depicted in FIG. 4 interactive GUI 400 may include several dynamic features for generating queries, populating autocompletion suggestions, and providing query recommendations in real-time. For example, interactive GUI 400 may include a query generation region 402, detailed query suggestion recommendation region 408, and result region 410.

As depicted in query generation region 402, a user may create a query in this region and receive real-time autocomplete suggestions as the user inputs information (e.g., a complex query such as a SQL query) into this region. For example, a user may intend to delete a table from a key-value data structure stored in database 106. In furtherance of this objective a user may begin by creating a complex, yet unfinished, query in query generation region 402 with a command 404 and additional complex query syntax elements, such autocompletion suggestion 406 (e.g., a table name). While a table name is suggested in this non-limiting example, it should be understood that one or more complex clauses may be suggested and/or entire complex queries or sections of code. An auto-completion engine may monitor the input on the query generation region 402 in real-time and implement one or more processes in FIG. 2 and/or FIG. 3 to provide autocompletion suggestions that have a high probability of completing the unfinished complex query being generated. The autocompletion suggestions may be presented as an option in a menu (e.g., an option in a drop-down menu, or an option on a button) or as a continuation of the unfinished complex query. The auto-completion engine may continuously monitor the input received in the query generation region 402 as long as the interactive GUI 400 is open.

Detailed query suggestion recommendation region 408 is asynchronously and dynamically populated with details regarding the autocompletion suggestion 406 based on the input received in query generation region 402. For example, as the interactive GUI 400 receives input in query generation region 402, query recommendation region may display relevant options indicative of queries that may assist a user inputting code in query generation region 402. Here, in one embodiment, as the command 404 "drop table" is received, detailed query suggestion recommendation region 408 may asynchronously provide (one or more) autocompletion suggestion 406 and relevant information regarding the autocompletion suggestion 406, such as version information associated with code being edited, one or more users that previously contributed to the code, permission information, the creation date and time associated with autocompletion suggestion 406, and the number of times the autocompletion suggestion 406 was previously used.

Result region 410 may dynamically and asynchronously display the result of what the autocompletion suggestion 406 or completed complex query entered into query generation region 402 does to the underlying code being edited. For example, in one embodiment, in response to a user selecting suggestion 1 (i.e., "cust_list") as the autocompletion suggestion 406, result region 410 may display the modified version of what a data structure may be converted to if the "drop table" command is implemented as it relates to the autocompletion suggestion 406 (i.e., "cust_list"). Although a database language (e.g., SQL) related modification is depicted in result region 410, it should be understood that this is a non-limiting example, and result region 410 may display modifications to code relating to other computing languages not explicitly depicted in FIG. 3.

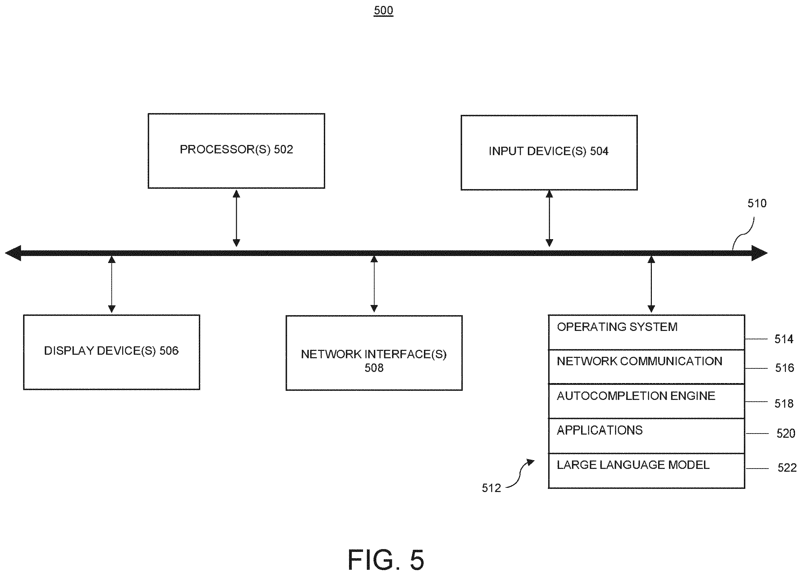

FIG. 5 illustrates a block diagram for a computing device, according to various embodiments of the present disclosure. For example, computing device 500 may function as server system 104. The computing device 500 may include a service that provides automatic feedback generation functionality as described above or a portion or combination thereof in some embodiments. The computing device 500 may be implemented on any electronic device that runs software applications derived from compiled instructions, including without limitation personal computers, servers, smart phones, media players, electronic tablets, game consoles, email devices, etc. In some implementations, the computing device 500 may include processor(s) 502, (one or more) input device(s) 504, one or more display device(s) 506, one or more network interfaces 508, and one or more computer-readable medium(s) 512 storing software instructions. Each of these components may be coupled by bus 510, and in some embodiments, these components may be distributed among multiple physical locations and coupled by a network 108.
Display device(s) 506 may be any known display technology, including but not limited to display devices using Liquid Crystal Display (LCD) or Light Emitting Diode (LED) technology. Processor(s) 502 may use any known processor technology, including but not limited to graphics processors and multi-core processors. Input device(s) 504 may be any known input device technology, including but not limited to a keyboard (including a virtual keyboard), mouse, track ball, camera, and touch-sensitive pad or display. Bus 510 may be any known internal or external bus technology, including but not limited to ISA, EISA, PCI, PCI Express, USB, Serial ATA or FireWire. Computer-readable medium(s) 512 may be any medium that participates in providing instructions to processor(s) 502 for execution, including without limitation, non-volatile storage media (e.g., optical disks, magnetic disks, flash drives, etc.), or volatile media (e.g., SDRAM, ROM, etc.). A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

Computer-readable medium(s) 512 may include various instructions for implementing an operating system 514 (e.g., Mac OS^{®}, Windows^{®}, Linux). The operating system may be multi-user, multiprocessing, multitasking, multithreading, real-time, and the like. The operating system may perform basic tasks, including but not limited to: recognizing input from input device(s) 504; sending output to display device(s) 506; keeping track of files and directories on computer-readable medium(s) 512; controlling peripheral devices (e.g., disk drives, printers, etc.) which can be controlled directly or through an I/O controller; and managing traffic on bus 510. Network communications instructions 516 may establish and maintain network connections (e.g., software for implementing communication protocols, such as TCP/IP, HTTP, Ethernet, telephony, etc.).

Database engine 518 may include instructions that enable computing device 500 to implement one or more methods as described herein. Application(s) 520 may be an application that uses or implements the processes described herein and/or other processes. The processes may also be implemented in operating system 514. For example, application(s) 520 and/or operating system 514 may execute one or more operations to monitor user interaction with an application and automatically generate user feedback based on the monitored user interaction on the interactive GUI 400.

Large Language Model 522 may be used in conjunction with one or more methods as described above. Input (e.g., complex queries) received at computing device 500 may be fed into a large language model 522 to predict/populate query recommendations, as depicted in figure 4. Additionally, user selections (e.g., an indication that autocompletion suggestion is selected or not selected) may be fed into the large language model 522 to train the large language model to populate more relevant autocompletion suggestions.

The described features may be implemented in one or more computer programs that may be executable on a programmable system including at least one programmable processor coupled to receive data and instructions from, and to transmit data and instructions to a data storage system (e.g., database 106), at least one input device, and at least one output device. A computer program is a set of instructions that can be used, directly or indirectly, in a computer to perform a certain activity or bring about a certain result. A computer program may be written in any form of programming language (e.g., Sandbox, SQL, Objective-C, Java), including compiled or interpreted languages, and it may be deployed in any form, including as a stand-alone program or as a module, component, subroutine, or other unit suitable for use in a computing environment.

Suitable processors for the execution of a program of instructions may include, by way of example, both general and special purpose microprocessors, and the sole processor or one of multiple processors or cores, of any kind of computer. Generally, a processor may receive instructions and data from a read-only memory or a random access memory or both. Elements of a computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data may include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

To provide for interaction with a user, the features may be implemented on a computer having a display device such as an LED or LCD monitor for displaying information to the user and a keyboard and a pointing device such as a mouse or a trackball by which the user can provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination thereof. The components of the system may be connected by any form or medium of digital data communication such as a communication network. Examples of communication networks include, e.g., a telephone network, a LAN, a WAN, and the computers and networks forming the Internet.

The computer system may include clients and servers. A client and server may generally be remote from each other and may typically interact through a network. The relationship of client and server may arise by virtue of computer programs running on the respective computers and having a client-server relationship to each other.

One or more features or steps of the disclosed embodiments may be implemented using an API. An API may define one or more parameters that are passed between a calling application and other software code (e.g., an operating system, library routine, function) that provides a service, that provides data, or that performs an operation or a computation.

The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call. API calls and parameters may be implemented in any programming language. The programming language may define the vocabulary and calling convention that a programmer will employ to access functions supporting the API.

In some implementations, an API call may report to an application the capabilities of a device running the application, such as input capability, output capability, processing capability, power capability, communications capability, etc.

While various embodiments have been described above, it should be understood that they have been presented by way of example and not limitation. It will be apparent to persons skilled in the relevant art(s) that various changes in form and detail can be made therein without departing from the scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

It is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

Although the present disclosure has been described in detail for the purpose of illustration based on what is currently considered to be the most practical and preferred embodiments, it is to be understood that such detail is solely for that purpose and that the disclosure is not limited to the disclosed embodiments, but, on the contrary, is intended to cover modifications and equivalent arrangements that are within the scope of the appended claims. For example, it is to be understood that the present disclosure contemplates that, to the extent possible, one or more features of any embodiment can be combined with one or more features of any other embodiment.

The present techniques will be better understood with reference to the following enumerated embodiments:
1. A system for intelligently providing auto-completion suggestions for complex queries comprising: a server comprising one or more processors; and a memory, in communication with the server, storing instructions that when executed by the one or more processors, causes the one or more processors to implement a method for: receiving a complex query at the server; removing or normalizing aliases from the complex query; automatically storing the complex query in a database along with a set of previously stored complex queries as aggregated query data; training a large language model on the aggregated query data using masking techniques by: masking one or more query syntax elements of each complex query in the aggregated query data; predicting, via the large language model, the masked one or more syntax elements of each query; calculating loss based on the predictions of the masked one or more syntax elements of each query; and retraining the large language model based on the calculated loss.
2. The system of any one of the preceding embodiments further comprising, wherein normalizing further comprises converting aliases to a predetermined standardized string.
3. The system of any one of the preceding embodiments further comprising, wherein masking further comprises tokenizing a predetermined number of query syntax elements.
4. The system of any one of the preceding embodiments further comprising, wherein predicting further comprises bidirectionally analyzing non-masked query syntax elements adjacent to masked query syntax elements in parallel.
5. The system of any one of the preceding embodiments further comprising, wherein the query syntax elements are clauses for a structured programming language.
6. The system of any one of the preceding embodiments further comprising, wherein predicting further comprises transmitting instructions to display predictions with accuracy probabilities exceeding a predetermined threshold on an interactive GUI on a user device.
7. The system of any one of the preceding embodiments further comprising, wherein the user activity in response to the predictions displayed on the interactive GUI are used as input to retrain into the large language model.
8. A method that, when executed by one or more processors, cause the processors to effectuate operations comprising those of any of embodiments 1-7.
9. A machine-readable medium comprising instructions that, when executed, by a data processing apparatus, cause: the data processing apparatus to perform operations comprising those of any of embodiments 1-7.
10. A computer-implemented method for intelligently providing autocompletion suggestions for complex queries: asynchronously receiving, by a processor, one or more complex queries at the one or more complex queries are generated at an interactive GUI on a user device; removing or normalizing aliases found in the one or more complex queries; predicting, by the processor, via the large language model, the next clause in the one or more complex queries as the one or more complex queries are generated via the interactive GUI; causing the interactive GUI to display a predetermined percentage of predictions with the highest accuracy probability scores as autocomplete options; and training the large language model based on detected user activity in response to the autocomplete options displayed on the interactive GUI.
11. The computer-implemented method of any one of the preceding embodiments further comprising wherein normalizing further comprises converting aliases to a predetermined standardized string.
12. The computer-implemented method of any one of the preceding embodiments further comprising, wherein predicting the next clause in the one or more complex queries further comprises tokenizing a predetermined number of query syntax elements.
13. The computer-implemented method of any one of the preceding embodiments further comprising, wherein predicting further comprises bidirectionally analyzing non-masked query syntax elements adjacent to masked query syntax elements in parallel.
14. The computer-implemented method of any one of the preceding embodiments further comprising, wherein the query syntax elements include clauses for a structured programming language.
15. The computer-implemented method of any one of the preceding embodiments further comprising, wherein predicting further comprises transmitting instructions to display predictions with accuracy probabilities exceeding a predetermined threshold on an interactive GUI on a user device.
16. The computer-implemented method of any one of the preceding embodiments further comprising, wherein user activity in response to the predictions displayed on the interactive GUI are used as input to retrain into the large language model.
17. A system that, when executed by one or more processors, cause the processors to effectuate operations comprising those of any of embodiments 10-16.
18. A machine-readable medium comprising instructions that, when executed, by a data processing apparatus, cause: the data processing apparatus to perform operations comprising those of any of embodiments 10-16.
19. A computer-implemented method comprising: training a large language model on the aggregated query data using masking techniques by: masking one or more query syntax elements of each complex query in the aggregated query data; predicting, via the large language model, the masked one or more syntax elements of each query; calculating loss based on the predictions of the masked one or more syntax elements of each query; retraining the large language model based on the calculated loss; receiving, by the one or more processors, one or more complex queries at the one or more complex queries are generated at an interactive GUI on a user device; predicting, by the processor, via the large language model, the next clause or revision to a previous clause in the one or more complex queries as the one or more complex queries are generated via the interactive GUI; causing the interactive GUI to display a predetermined percentage of predictions with the highest accuracy probability scores as autocomplete options; retraining the large language model based on detected user activity in response to the autocomplete options displayed on the interactive GUI.
20. The computer-implemented method of any one of the preceding embodiments further comprising, wherein training the large language model further includes normalizing aliases found in the aggregated query data.
21. The computer-implemented method of any one of the preceding embodiments further comprising, wherein masking further comprises tokenizing a predetermined number of query syntax elements.
22. The computer-implemented method of any one of the preceding embodiments further comprising, wherein predicting further comprises bidirectionally analyzing non-masked query syntax elements adjacent to masked query syntax elements in parallel.
23. The computer-implemented method of any one of the preceding embodiments further comprising, wherein the query syntax elements are include clauses for a structured programming language.
24. The computer-implemented method of any one of the preceding embodiments further comprising, wherein predicting further comprises transmitting instructions to display predictions with accuracy probabilities exceeding a predetermined threshold on an interactive GUI on a user device.
25. A system that, when executed by one or more processors, cause the processors to effectuate operations comprising those of any of embodiments 19-24.
26. A machine-readable medium comprising instructions that, when executed, by a data processing apparatus, cause: the data processing apparatus to perform operations comprising those of any of embodiments 19-24.

The invention is defined in the appended claims.

Thus, from one perspective, there has now been described systems and methods for training a large language model with query auto-completion training data and automatically generating query auto-completion training data in an interactive GUI. A computing system continuously trains and refines a large language model utilizing masking techniques to on complex software-related queries. The computing system is further configured to utilize the large language model to provide complex software-related query suggestions to users operating a graphical user interface real-time.

## Claims

1. A system for intelligently providing auto-completion suggestions for complex queries comprising:
a server comprising one or more processors; and
a memory, in communication with the server, storing instructions that when executed by the one or more processors, causes the one or more processors to implement a method comprising:
receiving a complex query at the server;
removing or normalizing one or more aliases from the complex query;
automatically storing the complex query in a database along with a set of previously stored complex queries as aggregated query data;
training a large language model on the aggregated query data using masking techniques by:
masking one or more query syntax elements of each complex query in the aggregated query data;
predicting, via the large language model, the masked one or more syntax elements of each query; and
calculating loss based on the predictions of the masked one or more syntax elements of each query; and
retraining the large language model based on the calculated loss.

2. The system of claim 1, wherein normalizing further comprises converting the one or more aliases to a predetermined standardized string.

3. The system of claim 1 or 2, wherein masking further comprises tokenizing a predetermined number of query syntax elements.

4. The system of any of claims 1 to 3, wherein predicting further comprises bidirectionally analyzing non-masked query syntax elements adjacent to masked query syntax elements in parallel.

5. The system of any of claims 1 to 4, wherein the query syntax elements include clauses for a structured programming language.

6. The system of any of claims 1 to 5, wherein predicting further comprises transmitting instructions to display predictions with accuracy probabilities exceeding a predetermined threshold on an interactive GUI on a user device.

7. The system of claim 6, wherein user activity in response to the predictions displayed on the interactive GUI are used as input to retrain into the large language model.

8. A computer-implemented method for intelligently providing auto-completion suggestions for complex queries comprising:
asynchronously receiving, by a processor, one or more complex queries as the one or more complex queries are generated at an interactive GUI on a user device;
removing or normalizing, by the processor, one or more aliases found in the one or more complex queries;
predicting, by the processor, via a large language model, a next clause in the one or more complex queries as the one or more complex queries are generated via the interactive GUI;
causing, by the processor, the interactive GUI to display a predetermined percentage of predictions with the highest accuracy probability scores as autocomplete options;
training, by the processor, the large language model based on detected user activity in response to the autocomplete options displayed on the interactive GUI.

9. The computer-implemented method of claim 8 wherein normalizing further comprises converting the one or more aliases to a predetermined standardized string.

10. The computer-implemented method of claim 8 or 9, wherein predicting the next clause in the one or more complex queries further comprises tokenizing a predetermined number of query syntax elements in the one or more complex queries.

11. The computer-implemented method of claim 10, wherein predicting further comprises bidirectionally analyzing non-masked query syntax elements adjacent to masked query syntax elements in parallel.

12. The computer-implemented method of any of claims 8 to 11, wherein the one or more complex queries include clauses for a structured programming language.

13. The computer-implemented method of any of claims 8 to 12, wherein predicting further comprises transmitting instructions to display predictions with accuracy probabilities exceeding a predetermined threshold on an interactive GUI on a user device.

14. The computer-implemented method of claim 13, wherein user activity in response to the predictions displayed on the interactive GUI are used as input to retrain into the large language model.

15. A computer-implemented method comprising:
training, by a processor, a large language model on aggregated query data using masking techniques by:
masking one or more query syntax elements of each complex query in the aggregated query data;
predicting, via the large language model, the masked one or more syntax elements of each query; and
calculating loss based on the predictions of the masked one or more syntax elements of each query;
retraining, by the processor, the large language model based on the calculated loss;
receiving, by the processor, one or more complex queries as the one or more complex queries are generated at an interactive GUI on a user device;
predicting, by the processor, via the large language model, a next clause or revision to a previous clause in the one or more complex queries as the one or more complex queries are generated via the interactive GUI;
causing, by the processor, the interactive GUI to display a predetermined percentage of predictions with the highest accuracy probability scores as autocomplete options; and
retraining, by the processor, the large language model based on detected user activity in response to the autocomplete options displayed on the interactive GUI.
